# EUROPEAN PATENT APPLICATION

(11) **EP 1 703 392 A2**
(43) Date of publication of application: **20.09.2006**
(21) Application number: 05254189.3
(22) Date of filing: 04.07.2005
(51) Int. Cl.: G06F 11/00, G06F 11/16

(54) **Method and apparatus for detecting failures in a partitioned large scale computer system**

(30) Priority: 18.03.2005 JP 2005078452
(71) Applicant: FUJITSU LIMITED, Kawasaki-shi, Kanagawa 211-8588 (JP)
(72) Inventor: Kawahara, Shigeru, Kawasaki-shi, Kanagawa 211-8588 (JP); Kinoshita, Takayuki, Kawasaki-shi, Kanagawa 211-8588 (JP); Itozawa, Shintaro, Kawasaki-shi, Kanagawa 211-8588 (JP); Hosoe, Koji, Kawasaki-shi, Kanagawa 211-8588 (JP); Sato, Sakutaro, Kawasaki-shi, Kanagawa 211-8588 (JP)
(74) Representative: Hitching, Peter Matthew

(57) **Abstract**

A communication method for detecting failure and for performing immediate stop processing is provided. It is a failure communication method of a computer, comprising a plurality of units A (101) (102) (103) (104), separated by partitions (3)(4) , and a unit B (2) interconnecting the units A(101) (102) (13) (104), in which the unit B (2) broadcasts identical information, generated based on information transferred from the units A (101) (102) (13) (104) to the unit B (2), to the units A (101) (102) (13) (104), wherein when failure occurs in a unit A (101), the unit B (2) is notified of failure information, receives the failure information, generates identical failure information based on the failure information and notifies the units A (101) (102) (13) (104) in normal conditions of the identical failure information, and the units A (101) receive the identical failure information, if it is from a unit A (101) belonging to the same partition (3), operation of the units A (102)(103) belonging to the same partition (3) is stopped immediately, and otherwise operation (3) of the units A (103) (104) is continued.

## Description

### Background of the Invention

### Field of the Invention

The present invention relates to failure of communication in a large-scale computer system and specifically to a technology for notifying failure in a partitioned large-scale computer system.

### Description of the Prior Art

Recently, large-scale computer systems have comprised of a plurality of units, and a plurality of the units constituting the systems have been configured so as to respond flexibly to the loading state by separating into each computer or partitioned computer (partition: a unit which is a part of the system but can be operated independently).

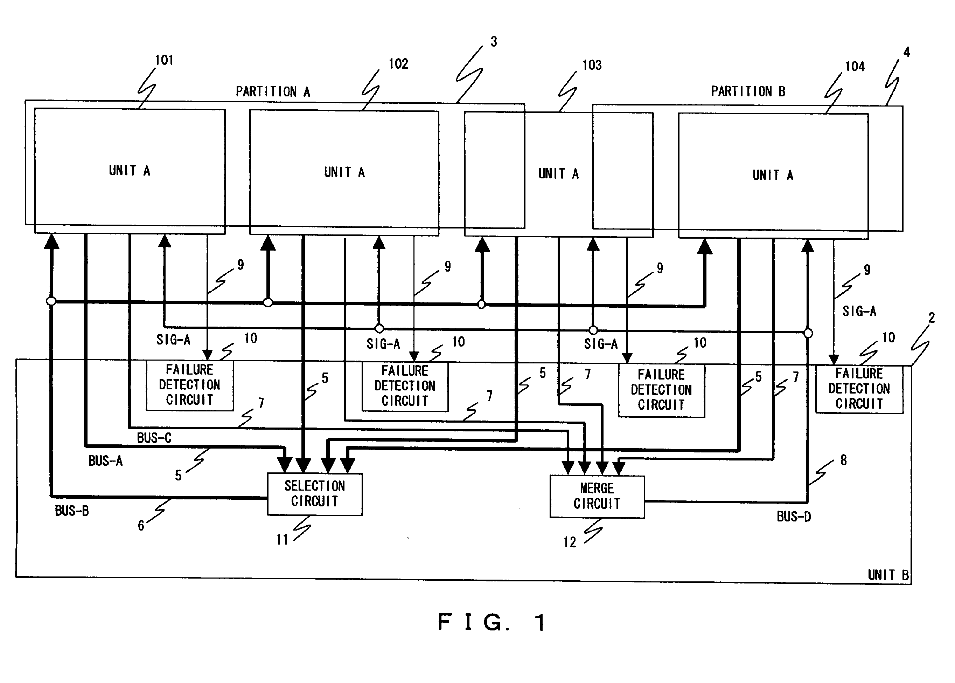

For example, a system configuration shown in Fig. 1 can be a possible example.

The system in Fig. 1 comprises a plurality of units A101, 102, 103, 104 (101-104and a unit B2 for controlling each of the units A101-104. Each of the units A are separated by partition in the way as indicated by a partition A3 and a partition B4, for example. The configuration of the units A101-104 and the unit B2 is that they are interconnected by buses, a BUS-A5, a BUS-B6, a BUS-C7 and a BUS-D8 so as to exchange necessary information.

The unit B2 can recognize the presence of each unit A101-104 by a failure detection circuit 10 configured in the unit B2 connected from the unit A101-104 by a signal line SIG-A9. In addition, the unit B2 comprises a selection circuit 11 and a merge circuit 12, and transmits request information (processing to be carried out), which cannot be solved inside the unit A101-104 via the BUS-A5. And the selection circuit 11 selects one of the pieces of request information transmitted from each of the units A101-104, and broadcasts the selected request information to each of the units A101-104 via the BUS-B6.

Next, the merge circuit 12 receives information transmitted from each unit A101-104 to the unit B2 at a prescribed timing via the BUS-C7 based on the information, generates transmission information for each of the units A101-104, and transmits the generated information via the BUS-D8.

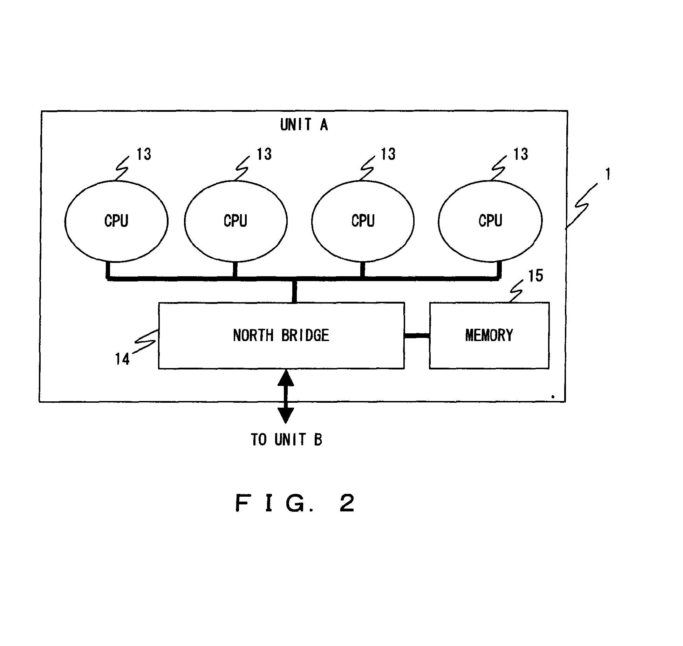

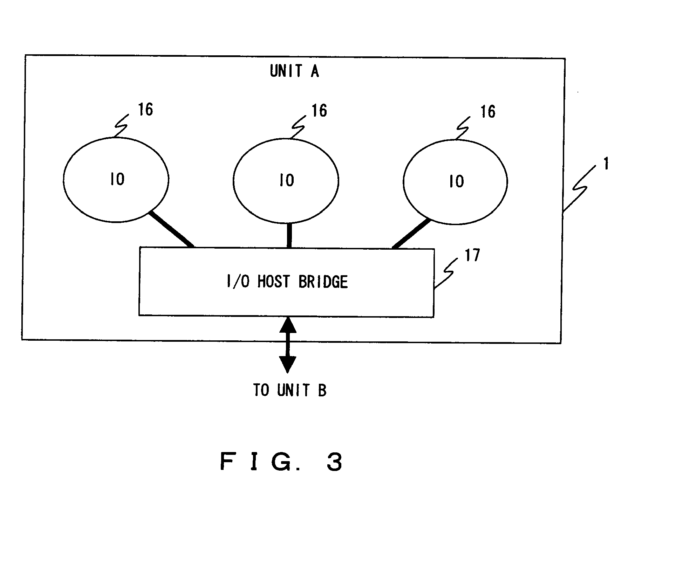

The inside of a unit A101-104 has a configuration shown in Fig. 2 and Fig. 3. The configuration shown in Fig. 2 comprises a plurality of CPUs 13, a north bridge 14 for interconnecting the CPUs with the unit B2 and memory 15 connected to the north bridge 14.

The configuration shown in Fig. 3 comprises IOs 16, interface circuits of a peripheral device such as a LAN card, and an I/O host bridge 17 for interconnecting the IOs to the unit B2.

In the system with a configuration explained above, when failure occurs in a unit, it is required to notify all units constituting the partition of the failure and to stop operation immediately. As a method for notifying other units of failure, a notifying method for interconnecting all units by exclusive signal lines was proposed in the past. Also, as another failure notifying method, a method for notifying failure by packets etc. was suggested.

According to Patent Document 1, it is suggested that in an information processor device, comprised of a plurality of devices, when a stop signal is generated from a device, the signal is transmitted to the other devices. When the stop signal is received from other device, an operation talking predetermined procedures is carried out.

According to Patent Document 2, it is suggested that failure analysis can be facilitated by stopping processors at the same time , no matter what processing the processors are carrying out, by stopping all processors by using unmaskable interruption with the highest priority.

According to Patent Document 3, when failure occurs in a processor, the error information retains the status. A microprocessor in the processor reads error information from the status, encodes based on the information by generating codes, retains the status and stores it. The error information with its status retained and encoded is written. Then it is notified to the other processors by an interruption signal. When the microprocessor is stopped by machine check halt, encoding is carried out according to the halt, the status is retained, and it is transmitted to other processors by the interruption signal. The processors, which received the notification, acquire failure condition of the processor, which transmitted notification, by reading status retention of the notifying processor.

According to Patent Document 4, it is proposed that failure information of each node is obtained from a failed node and nodes in the same partition, failure processing is carried out based on the information, and specification of a suspected part and failure processing are performed precisely and immediately.

However, in large-scale computer systems, the notification method from interconnecting between all units by exclusive signal lines results in increase in cost because necessity for each units to store partition information of all of the other units and consequent increase in connecting signal lines in attempt to improve usability of the system by configuring a plurality of partitions.

Also, with a method for communicating failure by packets, immediate and simultaneous stop of the partitions is not secured if one-on-one failure notice by failure notice packets is carried out from failed units to all the other units in the same partition. For example, in the case of failure in the packet transmission circuit or severe failure such as failure in power source of a unit, the failed unit cannot transmit failure notice packet, and therefore the other units constituting the partition cannot be stopped immediately.

Patent Document 1, 2 and 3 do not have any description of failure notice relating to large-scale computer systems, or do not consider failure notice control of a system introducing partitions . Especially, Patent Document 3 describes a method for communicating failure between processors in a unit constituting a system; however it does not consider the case that partition is configured for each unit.

According to Patent Document 4, in order to perform all stop processing of a partition in failure in a part of the partition, failure notice from individual unit and stop processing are carried out through a service processor and management tool. It takes some time to stop after failure occurrence, and thus erroneous operation and data destruction etc. occur from being affected by the failed unit during the time period. Also, it is a problem that the severe failure is not considered.

Patent Document 1: Japanese unexamined patent publication bulletin No. 55-121566

Patent Document 2: Japanese unexamined patent publication bulletin No. 02-165367

Patent Document 3: Japanese unexamined patent publication bulletin No. 03-084640

Patent Document 4: Japanese unexamined patent publication bulletin No. 2004-62535(US2004/0153888)

### Summary of the Invention

It is an object of the present invention to provide a communication method for immediate stop processing in failure occurrence in a part enabling immediate stop processing (for example, stop of hardware: hard stop) without the presence of a service processor (for example, software processing).

According to the present invention, in a failure communication method of a computer, comprising a plurality of units A separated by partitions and a unit B interconnecting the units A, in which the unit B broadcasts identical information, generated based on information transferred from the units A to the unit B, to the units A, when failure occurs in a unit A, the unit B is notified of said information as failure information, receives the failure information, generates identical failure information based on the failure information and notifies the identical failure information to the units A in normal conditions, and after the units A receives the identical failure information, if it is from a unit A belonging to the same partition, operation of the units A belonging to the same partition is stopped immediately, and if it is from a unit A belonging to a partition other than the same partition, operation of the units A is continued.

Also according to the present invention, in a failure communication method of a computer, comprising a plurality of units A separated by partitions and a unit B interconnecting the units A, in which the unit B broadcasts identical information, generated based on information transferred from the units A to the unit B, to the units A, when in severe failure in which the information cannot be notified from the unit A to the unit B, the unit B is notified, apart from the transfer, of the severe failure notice as severe failure information, the unit B receives the severe failure information, generates identical severe failure information based on the severe failure information and communicates the identical severe failure information to the units A in the normal condition, and after the units A receives the identical severe failure information, if it is from a unit A belonging to the same partition, operation of the units A belonging to the same partition is stopped immediately, and if it is from a unit A belonging to a partition other than the same partition, operation of the units A is continued.

Additionally, according to the present invention, a computer, comprising a plurality of units A separated by partitions and a unit B interconnecting the units A, in which the unit B broadcasts identical information, generated based on information transferred from the units A to the unit B, to the units A, comprises a circuit for notifying the unit B of failure information as the information when failure occurs in the units A, a merge circuit for receiving the failure information, for generating identical failure information based on the failure information and for communicating to the units A in the normal condition and a circuit for, after the units A receive the identical failure information, immediately stopping operation of the units A comprised in the same partition if it is from a unit A belonging to the same partition, and for continuing the operation, if it is from a unit A belonging to a partition other than the same partition.

Ideally, the merge circuit has a configuration for generating fields of the identical failure information based on contents of fields of the failure information and invalidating fields other than the failure information and the identical failure information.

Furthermore, according to the present invention, a computer, comprising a plurality of units A separated by partitions and a unit B interconnecting the units A, in which the unit B broadcasts identical information, generated based on information transferred from the units A to the unit B, to the units A, comprises a failure detection circuit, with interconnection line for confirming the presence of the units A between the units A and the unit B, for, when the unit B cannot be notified of failure from the unit A, receiving severe failure notice through the interconnection line and for notifying of the severe failure as severe failure information, a merge circuit for receiving the severe failure information, for generating identical severe failure information based on the severe failure information, and for notifying the units A in the normal condition of the identical severe information and a circuit for, after the units A receives the identical severe failure information, immediately stopping operation of the units A comprised in the same partition if it is from a unit A belonging to the same partition, and for continuing the operation, if it is from a unit A belonging to a partition other than the same partition.

Preferably, the merge circuit has a configuration for generating fields of the identical severe failure information based on contents of fields of the severe failure information and invalidating fields other than the failure information and the identical failure information.

By the above configuration, it is possible to perform immediate hard stop of units in the same partition when failure occurs. It is also possible to perform immediate hard stop of units in the same partition when severe failure occurs.

The present invention minimizes incorrect operation and data destruction caused by failure, improves reliability of the system and realizes immediate stop processing at a low cost without increasing signal lines ensuring a highly reliable computer system.

### Brief Description of the Drawings

Fig. 1 describes an example of configuration of a computer;
Fig. 2 shows an example of configuration of a unit A (CPU unit);
Fig. 3 shows an example of configuration of a unit A (I/O unit);
Fig. 4 describes a configuration of failure notifying method of the embodiment 1;
Fig. 5 is a flowchart of the operation of the failure notifying method of the embodiment 1;
Fig. 6 describes a configuration of failure notifying method of the embodiment 2;
Fig. 7 is a flowchart of the operation of the failure notifying method of the embodiment 2;
Fig. 8 is a diagram showing a data structure of a BUS-C; and
Fig. 9 is a diagram showing a data structure of a BUS-D.

### Description of the Preferred Embodiment

In the following description, details on the embodiments of the present invention are set forth with reference to drawings.

### (Embodiment 1)

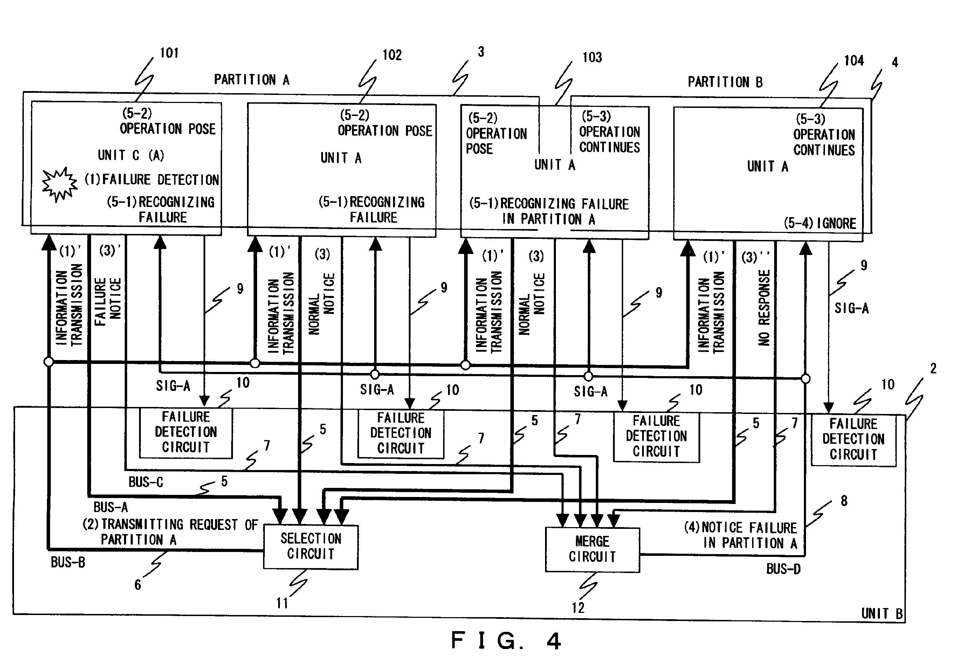

The system in Fig. 4 comprises a plurality of units A and a unit B2 for controlling each of the units A.

The units A are separated in a group of a partition A3 or a group of a partition B4; however the unit A103 can be a part of the partition A3 or a part of the partition B4.

An explanation of the preferred embodiment of the present invention is provided below in conjunction with the accompanying drawings. Fig. 4 is a diagram describing a computer (a large-scale computer system) of the embodiment of the present invention.

Normally, each unit A separated by each partition, interacts with a unit B2 over BUS-A5 (for example, Local Request Bus), and transmits a request, which is insolvable within the unit A, to the unit B2 (This is (1)' information transmission shown in Fig. 4).

And, over BUS-B6 (for example, Global Storage Address Bus), a request received by a section circuit 11 is broadcast to the other units A (This is (2) request transmission to partition in Fig. 4).

However, when failure is detected in a unit C101 (A), the failed unit C101 transmits failure notice to the unit B2 at a prescribed timing using a BUS-C7 (This is (3)' failure notice or (3) normal notice in Fig. 4. It is the normal notice when failure does not occur) .

The unit B2 determines failure information from information (packet) received over the BUS-C7, and transmits the same information to each of the unit C101 and units A102-104 over a BUS-D8 (This is notice to partition (4) in Fig. 4).

Units A, constituting the same partition A3 with the failed unit A, stop the operation according to the failure information received in the BUS-D8. Units A in partition B4, although receiving the failure information (such as error notice), continue the operation, ignoring the failure information (This is the operation in (5-1),(5-2),(5-3),(5-4) in Fig. 4).

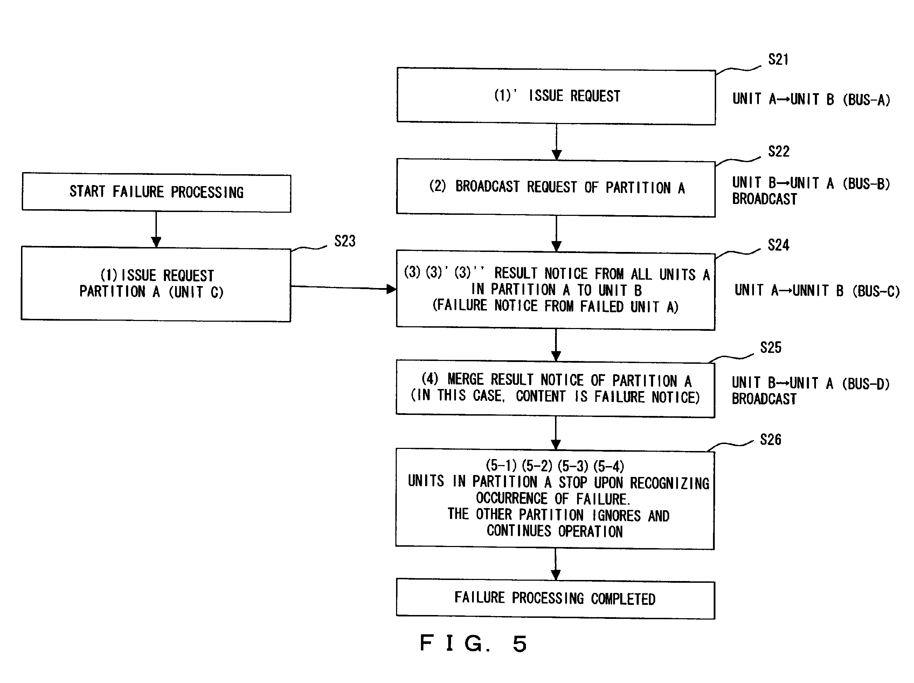

Next, an example of the case that failure is detected in a unit C101 (equivalent to the unit A) in the partition A3 is explained with reference to a flowchart in Fig. 5.

Step S21 carries out a normal operation of the system and issues a request (information transmission (1)').

In step S22, the selection circuit 11 receives the requests transmitted from each unit A, and broadcasts a selected request to units A in each partition (2). S21 and S22 are the state in which the (3) normal operation is carried out.

If failure occurs in the unit C101 in Fig. 4, then, in step S23, the failure occurred in the unit C101 of the partition A3 is detected ((1) failure detection in Fig. 4). Then, preparation for notifying the unit B2 of failure detection is started.

In step S24, all of the units A in the partitions A3 and B4 to unit B2 notify the unit B2 of the information (3), (3)' , (3)*''*. In the present example, from the failed unit C101 failure notice is added to the information (packet) for notification. From the unit A102, 103, which is not failed, a normal information notification is carried out. At that time, the notification is carried out by the BUS-C7, and the above failure notice is transferred after, for example, establishing an abort status field to a packet explained later and adding the severe failure information.

In step S25, a merge circuit 12 receives the information (packet) (3), (3)', (3)' ' transferred through the BUS-C7, and notifies of failure occurrence by the BUS-D8. In the present example, failure occurs in the unit C101. Therefore identical failure information is generated in order to have each of the units A comprised in the partition A3 recognize the failure, and the BUS-D8 notifies each of the units A of a result of the merge circuit 12. At that time, however, there is no response from the unit A104 comprised in the partition A3.

In step S26, the operation is stopped when each of the units A in the partition A3 recognizes the failure by the identical failure information. The partition B4 continue the operations ignoring the failure in the partition A3.

In the present example, the partitions A3 and B4 are notified the identical failure notice information generated by the merge circuit 12 over the BUS-D8. Each of the units A of the partition A3, which received the identical failure information, recognize the failure by the identical failure information, generated in the merge circuit 12, and stops the operation (5-1), (5-2) . The units A in the other partition B4 ignore the failure notice and continue the operation (5-3),(5-4).

According to the above configuration, the management processor is not notified of interruption, log recovery and restart processing are not performed, and instruction from the management processor is not required when failure occurs; therefore, it is possible to perform an immediate hard stop of the units in the same partition of the occurrence of the failure.

### (Embodiment 2)

The system in Fig. 4 comprises a plurality of units A and a unit B2 for controlling each of the units A.

The units A are separated in a group of a partition A3 or a group of a partition B4; however the unit A103 can be a part of the partition A3 or a part of the partition B4.

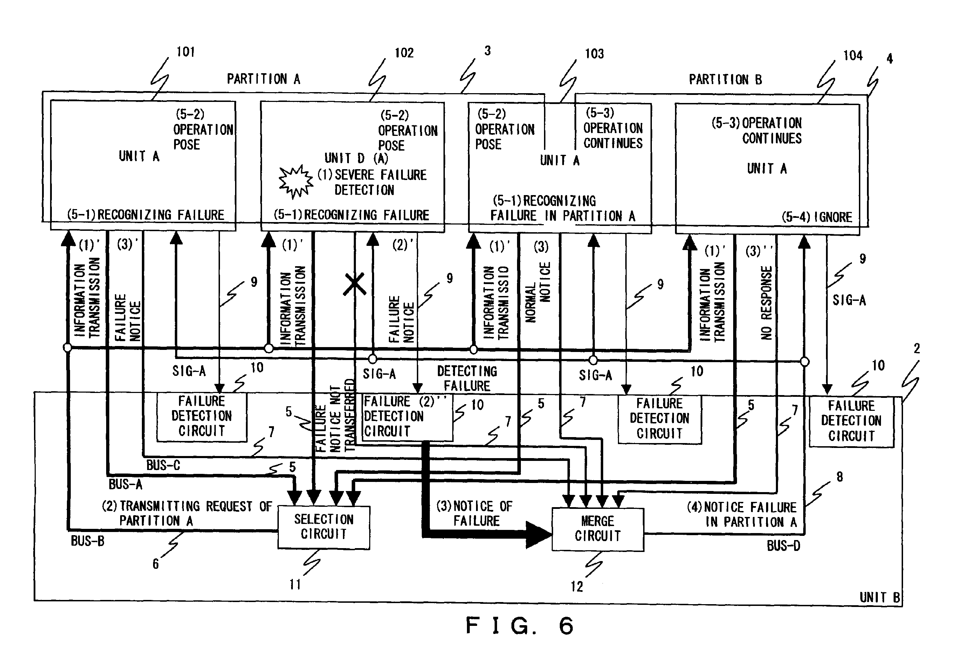

In Fig. 6, a severe failure notification method is explained. When failure is detected in a unit D102 (A), and the failure is so severe that the BUS-C7 cannot be used, the failed unit D102 uses the SIG-A9 and informs the unit B2 that the failed unit D102 is logically separated. Here, SIG-A9 is a signal line (interconnection line) to make the unit B2 recognize the presence of the unit D102.

Next, the unit B2 recognizes that severe failure occurred in the unit D102 by the SIG-A9. The unit B2 transfers and recognizes severe failure information to the merge circuit 12 instead of a failed unit D102, at the timing that the failed unit D102 has to transmit failure information using the BUS-C7.

Based on the informed sever failure information, identical severer failure information is generated, and the unit B2 transmits identical severe failure information to each of the units A using the BUD-D8. The units A constituting the same partition with the failure-detected unit D102 stops operation according to the severe failure information received in the BUS-D8(5-1),(5-2). The units Ain different partitions ignore the severe failure information received in the BUS-D8 and continue the operation(5-3),(5-4).

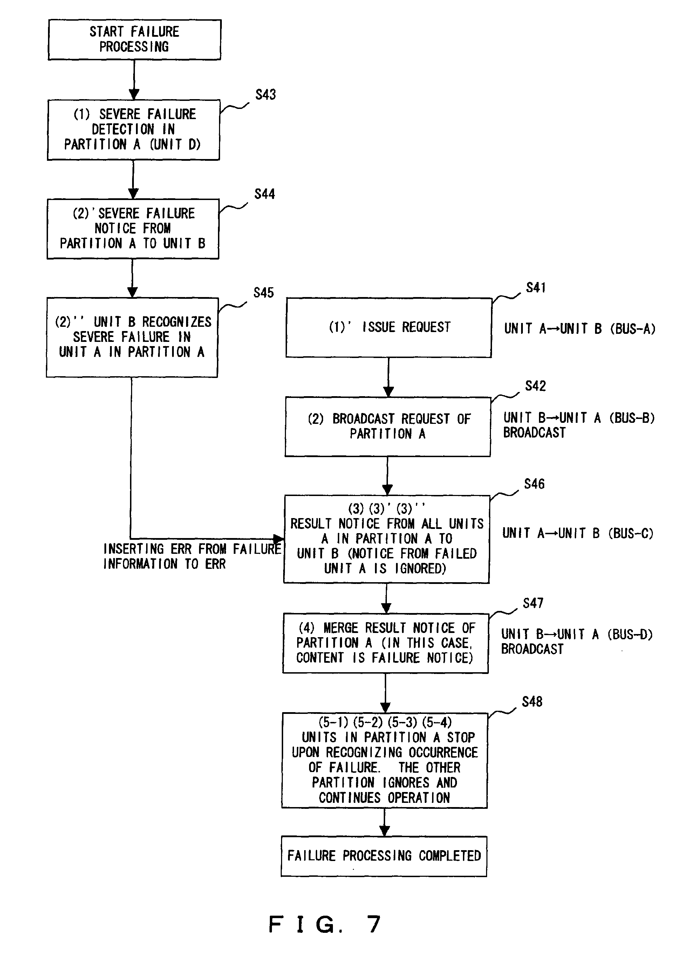

Next, an explanation of the case that severe failure occurs is provided with reference to a flowchart in Fig. 7.

Step S41 carries out operation of the normal system and issues a request (for information transmission (1)').

In step S42, the selection circuit 11 receives requests transmitted from each of the units A, and broadcasts the selected request to the units A in each partition (2). S41 and S42 are in the state that the normal operation is carried out.

When severe failure occurs, as shown in Fig. 6, in step S43, preparation for detecting and notifying the severe failure is started in a unit D102 in the partition A3.

Step S44 performs severe failure notification from the unit D102 to the unit B2 through the SIG-A9. The SIG-A9 confirms whether the unit A is logically present or not by determining whether it is separated or not.

In step S45, it is confirmed that a unit D102 of the partition A3 falls into severe failure (2)" by a failure detection circuit 10, comprised in the unit B2. Here, the failure detection circuit 10 is connected one-on-one to each of the units A, and when severe failure occurs, prepares for severe failure notification to the merge circuit 12.

Step 46 notifies the unit B2 of information (3), (3)', (3)" from all units A in the partitions A3 and B4. In the present example, severe failure notice is added to the information and notified to the merge circuit 12 from the unit D102 where the severe failure occurs via the SIG-A9 and the failure detection circuit 10. From the unit A where failure does not occur, normal information is informed. At that time, the notice is performed over the BUS-C7. The above severe failure notice is transferred after, for example, establishing an abort status field to a packet explained later and adding the severe failure information.

In step S47, the merge circuit 12 receives the information transferred over BUS-C7 (3), (3)' , (3)' ' and communicates the failure occurrence via the BUS-D8. In the present example, severe failure occurs in the unit D102. Therefore identical severe failure information for making each of the units A comprised in the partition A3 recognize the severe failure is generated in the merge circuit 12, and the BUS-D8 notifies each unit A of generation result of the merge circuit 12.

In step S48, the unit A in the partition A3 stops when it recognizes occurrence of severe failure. The other partitions ignore the failure occurred in the partition A3 and continue the operation.

In the present example, the partitions A3 and B4 are notified of the identical severe failure notice information generated by the merge circuit 12. Each unit A of the partition A3, which received the identical severe failure information recognizes the failure and stops the operation (5-1), (5-2). The units A in the other partition B4 ignore the failure notice and continue the operation (5-3), (5-4).

The above configuration, even when severe failure occurs, allows prompt hard stop of units in the same partition as the failed unit upon failure occurrence.

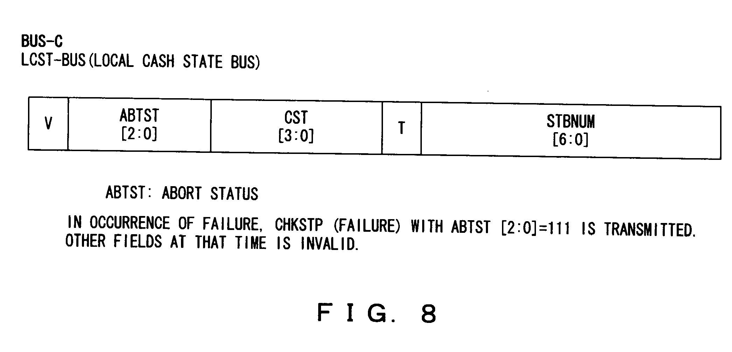

Next, an explanation of the information (packet) transmitted over the BUS-C7 and the BUS-D8 explained above is provided below. Fig. 8 shows an example of a data structure of the BUS-C.

The information transferred via the BUS-C7 can be comprised of fields such as V: valid, T: target-hit, ABTST: abort status, CST: cache status, STBNUM: store buffer number.

Here, V: valid is a flag indicating whether the packet is valid or invalid. T: target-hit indicates presence/absence of hit to dimm (Dual Inline Memory Module). ABTST: abort status notifies of retry notice or error notice. CST: cache status indicates the state of cache. STBNUM: store buffer number indicates where the dimm is written.

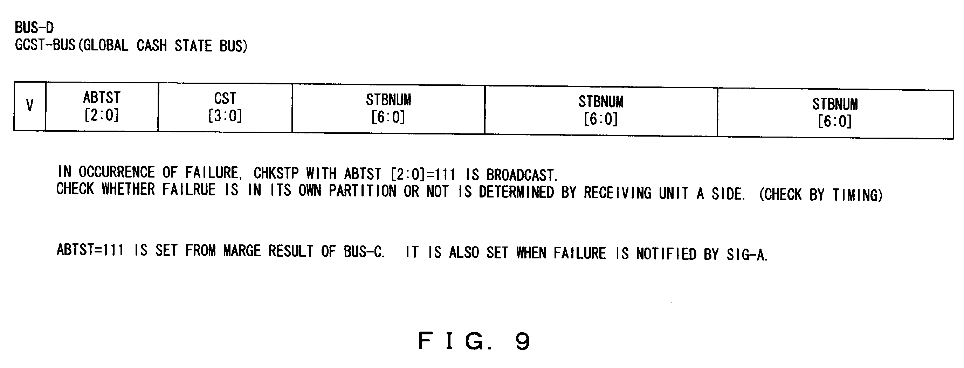

Fig. 9 shows an example of data field structure of the information transferred via the BUS-D. The BUS-D comprises V, T, CST as in the case of the BUS-C7, for example, and configured from Board_Id: Board Id and INVCNT: Invalidation count etc.

Board_Id: board Id indicates a board number of the unit A. INVCNT: Invalidation count indicates the number of share-hit.

When communicating a failure notice, a value is applied to the ABTST. Thus, when failure occurs, the other fields in the BUS-C7 and the other fields in the BUS-D8 become meaningless.

For example, in the case of the BUS-C7, CHKSTP (failure) of ABTST=111 is notified in failure occurrence. At that time, the other fields are invalid. In the normal condition, it is ABTST=000.

In the case of the BUS-D8, CHKSTP of ABTST=111 is broadcast in failure occurrence, and whether it is its own partition or not is checked. The check is performed by the receiving unit A side (the check can be carried out at a prescribed timing, for example).

When severe failure is notified by the SIG-A9, ABTST=111 is also set.

Then, it is communicated from each unit A in the merge circuit 12 via the US-C7. Information of the BUS-D8 is generated from the information communicated. However, the ABTST=111 of error transmission has the highest priority, and therefore the ABTST of the BUS-D8 is made 111 and is broadcasted even though normal information is notified from the other BUS-C7. And error notification is performed to all units A.

Since many of failure detections are constantly checked, it is difficult to determine exactly when the failure is detected; however, failure notice is generated and inserted when result notification of (3),(3)',(3) " after issuing the requests (1)'. Consequently, the failure notice can be inserted as long as the failure is detected before (3), (3)', (3)".

The present invention is not limited to the embodiments described above; however, various improvements and changes may be made without departing from the scope of the invention.

## Claims

1. A failure communication method of a computer (1), comprising a plurality of units A (101) (102) (103) (104) separated by partitions (3) (4) and a unit B (2) interconnecting the units A (101)(102)(103)(104), in which the unit B (2) broadcasts identical information, generated based on information transferred from the units A (101) (102) (103) (104) to the unit B (2), to the units A (101) (102) (103) (104),
wherein when failure occurs in a unit A (101), the unit B (2) is notified of said information as failure information, receives the failure information, generates identical failure information based on the failure information and notifies the identical failure information to the units A (102)(103)(104) in normal conditions, and
after the units A (101) (102) (103) (104) receive the identical failure information, if it is from a unit A (101) belonging to the same partition (3), operation of the units A (101)(102)(103) belonging to the same partition(3) is stopped immediately, and if it is from a unit A (101) belonging to a partition (3) other than said same partition(3), operation of the units A (103)(104) is continued.

2. The failure communication method of a computer (1) according to claim 1, wherein, furthermore, when in severe failure in which said information cannot be notified from the unit A (102) to the unit B (2), the unit B (2) is notified, of the severe failure notice as severe failure information, by the unit A (102), apart from the transfer,
the unit B (2) receives the severe failure information, generates identical severe failure information based on the severe failure information and notifies the identical severe failure information to the units A (101)(103)(104) in the normal condition, and
after the units A (101)(102)(103)(104) receive the identical severe failure information, if it is from a unit A (102) belonging to the same partition (3), operation of the units A (101) (102) (103) belonging to the same partition is stopped immediately, and if it is from a unit A (102) belonging to a partition (3) other than the said same partition (3), operation of the units A (103)(104) is continued.

3. A computer, comprising a plurality of units A (101) (102) (103) (104) separated by partitions (3) (4) and a unit B (2) interconnecting the units A (101) (102) (103) (104), in which the unit B (2) broadcasts identical information, generated based on information transferred from the units A (101) (102) (103) (104) to the unit B (2), to the units A (101)(102)(103)(104), wherein comprised are:
a circuit for notifying the unit B (2) of failure information as said information when failure occurs in the unit A (101) ;
a merge circuit (12) for receiving the failure information, for generating identical failure information based on the failure information and for notifying the units A (102) (103) (104) in the normal condition; and
a circuit for, after the units A (101) (102) (103) (104) receive the identical failure information, immediately stopping operation of the units A (101) (102) (103) comprised in the same partition (3) if it is from a unit A (101) belonging to the same partition (3), and for continuing the operation, if it is from a unit A (101) belonging to a partition (3) other than the said same partition (3).

4. The computer according to claim 3, wherein the merge circuit (12) generates fields of the identical failure information based on contents of fields of the failure information and invalidates fields other than the failure information and the identical failure information.

5. A computer (1), comprising a plurality of units A (101) (102) (103) (104) separated by partitions (3) (4) and a unit B (2) interconnecting the units A (101) (102) (103) (104), in which the unit B (2) broadcasts identical information, generated based on information transferred from the units A (101)(102)(103)(104) to the unit B (2), to the units A (101)(102)(103)(104), wherein comprised are:
a failure detection circuit (10), with interconnection line for confirming the presence of the units A (101) (102) (103) (104) between the units A (101) (102) (103) (104) and the unit B (2), for, when the unit B (2) cannot be notified of failure from the unit A (102), receiving severe failure notice through the interconnection line and for notifying of the severe failure as severe failure information;
a merge circuit (12) for receiving the severe failure information, for generating identical severe failure information based on the severe failure information, and for notifying the units A (101) (103) (104) in the normal condition of the identical severe information; and
a circuit for, after the units A (101)(102)(103)(104) receive the identical severe failure information, immediately stopping operation of the units A (101) (102) (103) comprised in the same partition (3) if it is from a unit A (102) belonging to the same partition (3), and for continuing the operation, if it is from a unit A (102) belonging to a partition (3) other than the said same partition(3).

6. The computer according to claim 5, wherein the merge circuit (12) generates fields of the identical severe failure information based on contents of fields of the severe failure information and invalidates fields other than the failure information and the identical failure information.
